(19)

Europäisches Patentamt
European Patent Office
Office européen des brevets

(11) **EP 4 239 096 A1**

(12) **EUROPEAN PATENT APPLICATION**
published in accordance with Art. 153(4) EPC

(43) Date of publication:
**06.09.2023 Bulletin 2023/36**

(21) Application number: **21886433.8**

(22) Date of filing: **01.11.2021**

(51) International Patent Classification (IPC):
**C22C 38/00** (2006.01)  **C22C 38/16** (2006.01)
**C22C 38/58** (2006.01)  **F23K 5/00** (2006.01)

(52) Cooperative Patent Classification (CPC):
**C22C 38/00; C22C 38/16; C22C 38/58; F23K 5/00**

(86) International application number:
**PCT/JP2021/040268**

(87) International publication number:
**WO 2022/092316 (05.05.2022 Gazette 2022/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.11.2020 JP 2020183943**

(71) Applicants:
• **Usui Co., Ltd.**
  **Sunto-gun, Shizuoka 411-8610 (JP)**
• **Kyushu University, National University
  Corporation
  Nishi-ku
  Fukuoka-shi
  Fukuoka 819-0395 (JP)**

(72) Inventors:
• **TATENO, Masato**
  **Sunto-gun, Shizuoka 411-8610 (JP)**
• **TAKAKUWA, Osamu**
  **Fukuoka-shi Fukuoka 819-0395 (JP)**
• **OKAZAKI, Saburo**
  **Fukuoka-shi Fukuoka 819-0395 (JP)**
• **MATSUNAGA, Hisao**
  **Fukuoka-shi Fukuoka 819-0395 (JP)**

(74) Representative: **Müller-Boré & Partner
Patentanwälte PartG mbB
Friedenheimer Brücke 21
80639 München (DE)**

(54) **STEEL PIPE FOR HIGH-PRESSURE HYDROGEN PIPING AND HIGH-PRESSURE HYDROGEN PIPING USING SAME**

(57) Provided are a steel pipe for high pressure hydrogen piping and high pressure hydrogen piping using the pipe, which are suitable for high pressure hydrogen gas piping for use in fuel cell vehicles.

The steel pipe for high pressure hydrogen piping has a chemical composition consisting of, by mass%, 0.17 to 0.27% C, 0.05 to 0.40% Si, 0.30 to 2.00% Mn, 0.035% or less P, 0.035% or less S, 0 to 0.50% Cu, 0 to 1.0% Mo, 0 to 0.15% V, and a balance being Fe and impurities.

The steel pipe has a metallographic structure composed of a mixed structure of bainite and ferrite in a middle part of the thickness of the steel pipe, a tensile strength in a hydrogen atmosphere of 500 MPa or more and 900 MPa or less, and a hardness in the middle part of the thickness of the steel pipe of 160 HV1 or more and 280 HV1 or less, and a defect on the inner surface of the steel pipe has a depth of 200 um or less at a maximum.

EP 4 239 096 A1

**Description**

Technical Field

The present invention relates to steel pipes for high pressure hydrogen piping and high pressure hydrogen piping using the pipes, and in particular, relates to a steel pipe used for high pressure hydrogen piping which pipe is suitable for high pressure hydrogen gas piping for use in fuel cell vehicles and high pressure hydrogen piping using the pipe.

Background Art

As a countermeasure against future energy depletion, there has been a growing movement to promote energy conservation and resource recycling and technologies to achieve these aims have been actively developed. Especially in recent years, reduction of $CO_2$ emissions associated with fuel combustion has been strongly demanded to prevent global warming as a global initiative. Transport equipment with less $Co_2$ emissions includes fuel cell vehicles (FCVs), each being equipped with a fuel cell (Polymer Electrolyte Fuel Cell (PEFC)) fueled by hydrogen and oxygen to generate electricity and thereby to drive a motor to run. Other transport equipment having a similar role includes electric vehicles, but they cannot fully meet requirements for a driving range and vehicle size. Thus, application of fuel cell-carried technology has been expected, in particular, to commercial vehicles. With the promotion of the fuel cell vehicles, constructions of hydrogen stations are being promoted nationwide, and the applications and demand for hydrogen handling equipment are expanding year by year. Hydrogen, fuel for the fuel cell vehicles, is generally carried in the vehicles in form of high pressure hydrogen gas, the pressure of which was initially 35 MPa, but has now increased to 70 MPa for the purpose of increasing the driving range. Therefore, it is conceivable that it is required to deal with use of related equipment in a high pressure gaseous hydrogen environment.

However, there are many technical issues that must be solved, in addition to deregulation and cost reduction, in order to spread the use of the high pressure hydrogen gas on a daily basis. In particular, to achieve both safety and economic efficiency of equipment using high pressure hydrogen gas, it is necessary to make a material selection and a strength design taking into consideration an effect of 'hydrogen embrittlement', that is, various strength properties of metal materials deteriorate due to the effect of hydrogen.

Conventionally, materials of pipes, joints, valves, and the like used in hydrogen stations have been stainless steels for piping, SUS316 and SUS316L (JIS G 3459), in consideration of the effect of hydrogen on the materials, as typical examples of materials usable in the high pressure gaseous hydrogen environment in accordance with the Exemplified Standards for the General High Pressure Gas Safety Regulations (The High Pressure Gas Safety Institute of Japan) which defines that the stainless steels are limited to have a reduction of area of 75% or more in a tensile test or a mill test report and to have a Ni equivalent of 28.5 or more at a normal operation temperature of -45°C or more and less than -10°C, the Ni equivalent of 27.4 or more at the normal operation temperature of -10°C or more and less than 20°C, or the Ni equivalent of 26.3 or more at the normal operation temperature of 20°C or more and 250°C or less. When verifying compatibility of materials in the hydrogen environment, it is common to apply the Exemplified Standards and as a benchmark, slow strain rate tensile (SSRT) tests in hydrogen are conducted and then relative reduction of area (RRA) between in hydrogen gas and in air is needed to satisfy acceptance criteria (criterion formula: RRA ≥ 0.8). Additionally, for allowable stress in design, tensile strength is set as basic strength and a safety factor (S = 4.0) is set to be sufficiently high, thereby ensuring safety. Since high pressure hydrogen piping installed in current fuel cell vehicles is exempt from the Exemplified Standards, there are no restrictions on the use of materials, but, the standard material, SUS316L, for hydrogen stations has been employed in consideration for its safety, track records, and so on.

Besides, carbon steel or the like, which is a relatively inexpensive material, is not up to the standard because it is easily affected by hydrogen and has a poor track record. However, SUS316L has a low strength and thus a pipe wall thereof becomes thick with a small bore, and thereby a flow rate of hydrogen therethrough is low. To ensure the flow rate, an increase in an inner diameter of the pipe is required, whereas it is desirable to increase a wall thickness of the pipe according to the level of high pressure to resist the high pressure. Ideally, the wall thickness is minimized for reasons such as economic efficiency and it is thus expected to apply high strength materials usable in the high pressure gaseous hydrogen environment in the future. Other technologies used under high pressure conditions include high pressure fuel injection pipes for diesel engines in which fuel is injected at high pressure. The fuel injection pipes are disclosed in Patent Literatures 1 and 2 as described below.

Patent Literature 1 discloses a method of manufacturing steel pipes for use in fuel injection for diesel engines. The method includes shot blasting on an inner surface of a hot-rolled seamless steel pipe material for grinding and polishing, followed by cold drawing. It is described that the manufacturing method allows the depth of flaws (such as concave and concave, scab, and small crack) on the inner surface of the steel pipe to be 0.10 mm or less, thus increasing in strength of the steel pipe used for fuel injection. Further, Patent Literature 2 discloses a steel pipe as a fuel injection pipe in which the maximum diameter of nonmetallic inclusions present at least in a region extending from the inner surface of the steel pipe to a depth of 20 μm is 20 μm or less and tensile strength is 500 MPa or more.

Citation List

Patent Literature

Patent Literature 1: JP H9-57329 A
Patent Literature 2: JP 2007-264711 A

Summary of Invention

Technical Problem

The stainless steel SUS316L (JIS G 3459) for piping, which is a material is usable in the high pressure gaseous hydrogen environment, has the compatibility in the hydrogen environment but lacks economic efficiency. In addition, only use of the standard materials has become a barrier to spread high pressure hydrogen gas handling equipment. Besides, under the hydrogen gas environment, it is necessary to understand the effect of hydrogen on materials. However, neither Patent Literatures 1 nor 2 clearly discloses the hydrogen embrittlement, which is the deterioration of various strength properties of metal materials due to the effect of hydrogen.
The present invention has been proposed in view of the circumstances and has an object to provide a steel pipe for high pressure hydrogen piping which achieves safety and economic efficiency by verifying the effect of hydrogen on the fatigue property of carbon steel, and also provide the high pressure hydrogen piping using the steel pipe.

Solution to Problem

A steel pipe for high pressure hydrogen piping of the invention has a chemical composition consisting of, by mass%:

C: 0.17 to 0.27%;
Si: 0.05 to 0.40%;
Mn: 0.30 to 2.00%;
P: 0.035% or less;
S: 0.035% or less;
Cu: 0 to 0.50%;
Mo: 0 to 1.0%;
V: 0 to 0.15%; and
a balance being Fe and impurities. The steel pipe has a metallographic structure composed of a mixed structure of bainite and ferrite in a middle part of the thickness of the steel pipe, a tensile strength in a hydrogen atmosphere of 500 MPa or more and 900 MPa or less, a hardness in the middle part of the thickness of the steel pipe of 160 HV1 or more and 280 HV1 or less, an inner diameter d of 3 mm or more, an outer diameter D of 12 mm or less, and the thickness of 1 mm or more. A ratio of the outer diameter to the inner diameter satisfies a formula (1) described below and a defect on the inner surface of the steel pipe has a depth of 200 um or less at a maximum.

[Math. 1]

$$D/d \geq 2.0 \qquad (1)$$

Instead of part of Fe, the steel pipe for high pressure hydrogen piping contains one or more of, by mass%:

Ti: 0.005 to 0.015%;
Nb: 0.015 to 0.045%;
Cr: 0 to 1.0%;
Ni: 0 to 0.50%;
Al: 0.005 to 0.060%;

O: 0.0040% or less;
Ca: 0.0010% or less; and
N: 0.0020 to 0.0080%.

Further, the chemical composition of the steel pipe contains one or more selected from, by mass%:

Cr: 0.2 to 1.0%;
Mo: 0.03 to 1.0%;
Cu: 0.03 to 0.50%;
Ni: 0.03 to 0.50%; and
V: 0.06 to 0.10%.

In addition, the high pressure hydrogen piping of the invention uses the steel pipe having any one of the above chemical compositions, as a material.

Advantageous Effects of Invention

The steel pipe for high pressure hydrogen piping of the present invention has superior fatigue property, which makes it possible to achieve the steel pipe with both safety and economic efficiency. Therefore, the steel pipe for high pressure hydrogen piping of the invention is suitable for use as high pressure hydrogen piping, in particular, for use in fuel cell vehicles.

Description of Embodiments

Details of each requirement in the present invention are described below.

1. Chemical composition

The following explanations are about reasons for limitation of each element. In the explanations, a unit '%' about content refers to 'mass %'.

C: 0.17-0.27%

C is an effective element in increasing strength of steel. In order to ensure desired tensile strength, C content is needed to be 0.17% or more. However, the C content exceeding 0.27% causes a decrease in workability. Thus, the C content is preferably 0.17% or more and 0.27% or less.

Si: 0.05-0.40%

Si is preferably contained for deoxidation of steel. In order to enhance the strength, Si content is needed to be 0.05% or more. However, the Si content exceeding 0.40% may cause a decrease in toughness.

Mn: 0.30-2.0%

Mn is an element that not only has the deoxidizing effect but also is effective in increasing hardenability of steel to improve strength and toughness. However, Mn content of less than 0.30% results in insufficient strength, whereas the Mn content exceeding 2.0% causes coarsening of MnS and thus extension in hot rolling, thereby resulting in decreased toughness. Therefore, the Mn content should be 0.30% or more and 2.0% or less.

P: 0.035% or less

P is an unavoidable element in steel as an impurity. P content exceeding 0.035% causes not only a decrease in hot workability but also a marked decrease in toughness due to grain boundary segregation. Therefore, the P content should be 0.035% or less.

S: 0.035% or less

S is an unavoidable element in steel as an impurity, as with P. S content exceeding 0.035% causes it to be segregated at a grain boundary and further causes sulfide inclusions to be generated, which easily leads to a decrease in fatigue strength. Therefore, the S content should be 0.035% or less.

Cu: 0-0.50%

Cu is an element having an effect to increase hardenability of steel to improve strength and toughness. However, Cu content exceeding 0.50% causes the effect to be saturated and an increase in alloy cost. Therefore, the Cu content should be 0.50% or less.

Mo: 0-1.0%

Mo is an element having an effect to improve the hardenability and to increase temper softening resistance, thereby to contribute to ensuring high strength. However, Mo content exceeding 1.0% causes the effect to be saturated and an increase in alloy cost. Therefore, if Mo is contained in steel, the Mo content should be 1.0% or less.

V: 0-0.15%

V is an element that is precipitated in tempering as fine carbide (VC) to increase temper softening resistance to thereby allow for high-temperature tempering, resulting in contribution to achieving high strength and toughness of steel. However, V content exceeding 0.15% rather than causes decreased toughness. Thus, if V is contained in the steel, the V content should be 0.15% or less.

Ti: 0.005-0.015%

Ti is an element that is finely precipitated, for example, in the form of TiN, resulting in contribution to prevention of grain coarsening. To obtain the effect, Ti content is needed to be 0.005% or more. However, when the Ti content exceeds 0.015%, the effect of grain refining may tend to be saturated and, in some cases, there is a risk of generation of large Ti-Al complex inclusions. Therefore, the Ti content should be 0.005% or more and 0.015% or less.

Nb: 0.015-0.045%

Nb is an essential element for achieving a desired fine-grained texture because the element is finely dispersed in steel as carbide or carbonitride to have an effect of strongly pinning grain boundaries. Further, the fine dispersion of carbide or carbonitride of Nb improves strength and toughness of the steel. To these ends, Nb content should be 0.015% or more and 0.045% or less.

Cr: 0-1.0%

Cr is an element having an effect to improve hardenability and wear resistance of steel. However, Cr content exceeding 1.0% causes a decrease in toughness and cold workability. Thus, if Cr is contained in the steel, the Cr content should be 1.0% or less.

Ni: 0-0.50%

Ni is an element having the effect to increase hardenability of steel to improve strength and toughness, as with Cu. However, when Ni content exceeds 0.50%, this effect is saturated and furthermore it results in an increase in alloy cost. Thus, if Ni is contained in the steel, the Ni content should be 0.50% or less.

Al: 0.005-0.060%

Al is an element that is effective for deoxidation of steel and has effects to increase toughness and workability of the steel. In order to obtain these effects, 0.005% or more of Al is needed to be contained in the steel. However, the Al content exceeding 0.060% has the risk of generation of large Ti-Al complex inclusions. Therefore, the Al content should be 0.005% or more and 0060% or less.

O: 0.0040% or less

O causes formation of a coarse oxide, which is prone to the resultant reduction in limit internal pressure. In this light, O content is needed to be 0.0040% or less.

Ca: 0.0010% or less

Ca has an effect to flocculate silicate-based inclusions. Ca content exceeding 0.0010% causes generation of coarse C-based inclusions, resulting in reduction of limit internal pressure. Thus, the Ca content should be 0.0010% or less.

N: 0.0020-0.0080%

N is an unavoidable element in steel as an impurity. However, 0.0020% or more of N is needed to remain in steel in order to prevent grain coarsening due to the pinning effect of TiN, in the present invention. However, when N content exceeds 0.0080%, the risk of generation of large Ti-Al complex inclusions increases. Therefore, the N content should be 0.0020% or more and 0.0080% or less.

2. Metallographic structure

Preferably, the steel pipe for high pressure hydrogen piping of the present invention has a metallographic structure composed of a mixed structure of bainite and ferrite. If martensite is contained in the structure, it ensures higher than 1000 MPa of tensile strength, but it may have insufficient compatibility in the hydrogen environment. One example of improving it requires a tempering treatment in a high temperature, but it leads to an increase in cost according to the heat treatment. The present invention has been found to fulfill a desired mechanical characteristic in the form of the micro-alloyed, metallographic structure, without need the heat treatment, to achieve a steel pipe for high pressure hydrogen piping and the high pressure hydrogen piping using the steel pipe with both safety and economic efficiency.

3. Mechanical property

The steel pipe for high pressure hydrogen piping of the invention preferably has 500 MPa or more and 900 MPa or less of tensile strength in an atmosphere of hydrogen.

Further, a hardness in the middle part of the thickness of the steel pipe is preferably 160 HV1 or more and 280 HV1 or less. When the hardness is less than 160 HV1, sufficient strength cannot be achieved in the hydrogen atmosphere. On the other hand, the hardness exceeds 280 HV1, the effect of hydrogen on material properties tends to be more marked. In this regard, the 'HV1' means 'hardness symbol' when a Vickers hardness test is conducted with a test force of 9.8 N (1 kgf) (see JIS Z 2244:2009). 160 HV1 or more of the hardness in the middle part of the thickness of the pipe results in achievement of 500 MPa or more of the tensile strength.

Besides, the depth of a defect on the inner surface of the steel pipe is preferably 200 um or less at a maximum.

4. Dimensions

Dimensions, a ratio of the outer diameter to the inner diameter, and the like of the steel pipe for high pressure hydrogen piping of the invention are set depending on the applied technology, the intended use, and so on. For example, the steel pipe for high pressure hydrogen piping preferably has 3 mm or more of the inner surface d, 12 mm or less of the outer diameter D, and 1 mm or more of the thickness and satisfies the above-mentioned formula (1) of the ratio of the outer diameter to the inner diameter.

In this regard, D included in the formula (1) refers to the outer diameter (mm) of the steel pipe for high pressure hydrogen piping and d refers to the inner diameter (mm) of the pipe.

No upper limit of the ratio D/d is particularly set, but when its value is too large, it becomes difficult in bending work. Thus, the value is preferably 3.0 or less and more preferably 2.8 or less.

The invention is described more particularly by means of examples below, but it is not limited to these examples.

[Examples]

Industrially, on the assumption that defects in members causing crack are inevitable, equipment is designed in consideration of the fatigue limit of the members when the equipment would be used for an extremely long time and it would need to withstand too many cyclic stress. In addition, it is important to verify effects of defect dimensions and inclusions to ensure high reliability. One of the verifications is the Varea parameter model (Non-patent literature: 'Metal fatigue-Effects of Small Defects and Inclusions' written by Yukitaka Murakami, First edition (1993), Yokendo), in which effects of small defects on the fatigue limits are quantitatively evaluated. Based on the Varea parameter model and results of fatigue life tests, the fatigue crack growth threshold $\Delta K_{th}$ at each stress ratio is calculated, and finally $\Delta K_{th}$ for R = 0, which is the specification for high pressure hydrogen piping in fuel cell vehicles, is derived. Further, the stress intensity factor range $\Delta K$ of a crack on the inner surface of the piping under internal pressure is given by a formula (2) below.

[Math. 2]

$$\Delta K = (2.24S^2 \Delta p / S^2 - 1) \sqrt{\pi a} \qquad (2)$$

In the formula (2), S denotes a ratio of the inner and outer diameters, $\Delta p$ denotes a pressure range (MPa), and a denotes a depth of the crack ($\mu$m). Here, since $\Delta K_{th, R=0} \geq \Delta K$ means that the fatigue limit design is applicable, a theoretical lower limit is the ratio of the inner and outer diameters that is derived when $\Delta K_{th, R=0} = \Delta K$.

Fatigue life tests at R = -1 and 0.1 were conducted using the steel grade of the present invention which were controlled to have a chemical composition shown in Table 1, and then the lower limit of the ratio of the inner and outer diameters at which the fatigue limit design was applicable was determined based on the $\sqrt{area}$ parameter model.

Steel materials (billets) having a chemical composition shown in Table 2 were cut to a predetermined length, and worked for test specimens as materials under the fatigue life tests. At each portion to be evaluated in the materials under the tests, a small defect with a depth of 100 um ($\sqrt{area}$ = 125 $\mu$m) was provided as a defect which was assumed to exist in the pipe material based on the $\sqrt{area}$ parameter model.

The metallographic structure at this time was composed of a mixed structure of bainite and ferrite with the tensile strength of 703 MPa in the air and 698 MPa in the hydrogen, with 223 HV1 of the hardness at the middle part of the thickness of the billet (Table 3). From the result, the tensile strength in the air can be regarded to equivalent to that in hydrogen.

The fatigue life tests were carried out under the condition that the cyclic stress was varied in a manner to take sinusoidal waves relative to time at the stress ratios R = -1 and 0.1, a frequency in the air was 10 Hz, and a frequency in the hydrogen gas was 1 Hz. The fatigue life tests in the hydrogen gas were carried out with 95 MPa of the hydrogen gas enclosed in a pressure vessel of a testing machine. Results of the tests are shown in Table 4 for the relation between the stress amplitude and $\Delta K_{th}$ of the fatigue limit at the stress ratios R = -1 and 0.1. In this regard, the fatigue limit was evaluated as a maximum stress amplitude at which no fracture occurred even when it was repeated $1 \cdot 10^7$ cycles in the air and $2 \cdot 10^6$ cycles in the hydrogen gas.

Then, $\Delta K_{th}$ for R = 0, which is the specification for high pressure hydrogen piping in fuel cell vehicles, derived based on the $\sqrt{area}$ parameter model and the results of fatigue life tests results in $\Delta K_{th, R=0}$=4.86 MPa m$^{1/2}$. If the inner pressure range $\Delta p$ = 90 MPa acts on the pipe with a crack of depth a = 100 um on the inner surface, S = 2.0 is derived as the lower limit from the formula (2), for the ratio of the inner and outer diameters at which the fatigue limit design is applicable.

When the inner pressure range $\Delta p$ = 90 MPa acts on the pipe with a crack of depth a = 200 um on the inner surface, S = 2.4 is derived as the lower limit from the formula (2) for the ratio of the inner and outer diameters at which the fatigue limit design is applicable. This satisfies the formula (1).

As for the ratio of the inner and outer diameters at which the fatigue limit design is applicable, one example is that use of a carbon steel pipe for machine structural use, STKM17A, under the same condition results in D/d ≥ 2.2, whereas use of the steel pipe for high pressure hydrogen piping of the present invention results in D/d ≥ 2.0 and further when the inner diameter d = 3.5 mm, it allows the pipe to be made approximately 24% thinner.

Furthermore, as the results of the fatigue limit tests (R = -1, 0.1) in the hydrogen gas by using the test specimens with the provided small defect having the depth of 100 um in the invention, it was confirmed that the fatigue limit in the hydrogen gas was not decreased relative to that in the air.

From these results, it was found that high pressure hydrogen piping can be designed in the hydrogen in the same way as in the air and the high pressure hydrogen piping using the above steel grade is achieved.

[Table 1]

| Chemical Composition (mass%) | | | | | | | | |
|---|---|---|---|---|---|---|---|---|
| C | Si | Mn | P | S | Cu | Mo | V | Balance |
| 0.17 -0.27 | 0.05 -0.40 | 0.3 ~2.00 | 0.035 or less | 0.035 Or less | 0 -0.50 | 0 -1.00 | 0 -0.15 | Fe and Impurities |

[Table 2]

| Chemical Composition (mass%) | | | | | | | | | | | | |
|---|---|---|---|---|---|---|---|---|---|---|---|---|
| C | Si | Mn | P | S | Cu | Mo | V | Ti | Nb | Cr | Ni | Al |
| 0.210 | 0.330 | 1.410 | 0.017 | 0.003 | 0.030 | 0.190 | 0.060 | 0.010 | 0.030 | 0.040 | 0.030 | 0.030 |

[Table 3]

| Test Atmosphere | Yield Strength (MPa) | Tensile Strength (MPa) | Hardness HV1 |
|---|---|---|---|
| Air-1 | 518 | 700 | 223 |
| Air-2 | 527 | 703 | |
| Hydrogen-1 | 502 | 698 | |

[Table 4]

| Stress Ratio R | Test Atmosphere | Stress Amplitude $\sigma_a$ (MPa) | $\Delta K_{th}$ (MPa m$^{1/2}$) |
|---|---|---|---|
| -1 | Air | 260 | 5.79 |
| | Hydrogen | 260 | 5.95 |
| 0.1 | Air | 160 | 3.40 |
| | Hydrogen | 160 | 3.36 |

**Claims**

1. A steel pipe for high pressure hydrogen piping, having a chemical composition consisting of, by mass%:

   C: 0.17 to 0.27%;
   Si: 0.05 to 0.40%;
   Mn: 0.30 to 2.00%;
   P: 0.035% or less;
   S: 0.035% or less;
   Cu: 0 to 0.50%;
   Mo: 0 to 1.0%;
   V: 0 to 0.15%; and
   a balance being Fe and impurities, wherein

   the steel pipe has a metallographic structure composed of a mixed structure of bainite and ferrite in a middle part of a thickness of the steel pipe, a tensile strength in a hydrogen atmosphere of 500 MPa or more and 900 MPa or less, a hardness in the middle part of the thickness of the steel pipe of 160 HV1 or more and 280 HV1 or less, an inner diameter d of 3 mm or more, an outer diameter D of 12 mm or less, and the thickness of 1 mm or more,
   a ratio of the outer diameter to the inner diameter satisfies:

$$[\text{Math. 1}] \quad D/d \geq 2.0 \quad (1), \text{ and}$$

   a defect on an inner surface of the steel pipe has a depth of 200 um or less at a maximum.

2. The steel pipe for high pressure hydrogen piping according to claim 1, the steel pipe containing one or more of, by mass%:

   Ti: 0.005 to 0.015%;

Nb: 0.015 to 0.045%;
Cr: 0 to 1.0%;
Ni: 0 to 0.50%;
Al: 0.005 to 0.060%;
O: 0.0040% or less;
Ca: 0.0010% or less; and
N: 0.0020 to 0.0080%,
instead of part of Fe.

3. The steel pipe for high pressure hydrogen piping according to claim 1 or 2, wherein the chemical composition of the steel pipe contains one or more selected from, by mass%:

Cr: 0.2 to 1.0%;
Mo: 0.03 to 1.0%;
Cu: 0.03 to 0.50%;
Ni: 0.03 to 0.50%; and
V: 0.06 to 0.10%.

4. High pressure hydrogen piping using the steel pipe according to any one of claims 1 to 3, as a material.

## INTERNATIONAL SEARCH REPORT

| International application No. |
| --- |
| **PCT/JP2021/040268** |

**A. CLASSIFICATION OF SUBJECT MATTER**

*C22C 38/00*(2006.01)i; *C22C 38/16*(2006.01)i; *C22C 38/58*(2006.01)i; *F23K 5/00*(2006.01)i
FI: C22C38/00 301Z; C22C38/16; C22C38/58; F23K5/00 301A

According to International Patent Classification (IPC) or to both national classification and IPC

**B. FIELDS SEARCHED**

Minimum documentation searched (classification system followed by classification symbols)

C22C38/00-C22C38/60; F23K5/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2016-65312 A (JFE STEEL CORP.) 28 April 2016 (2016-04-28)<br>entire text | 1-4 |
| A | JP 2016-65313 A (JFE STEEL CORP.) 28 April 2016 (2016-04-28)<br>entire text | 1-4 |
| A | JP 9-87800 A (THE JAPAN STEEL WORKS, LTD.) 31 March 1997 (1997-03-31)<br>entire text | 1-4 |
| A | JP 2019-183218 A (NIPPON STEEL CORP.) 24 October 2019 (2019-10-24)<br>entire text, all drawings | 1-4 |
| A | WO 2018/055937 A1 (JFE STEEL CORP.) 29 March 2018 (2018-03-29)<br>entire text, all drawings | 1-4 |
| A | US 2015/0047754 A1 (HYUNDAI MOTOR CO.) 19 February 2015 (2015-02-19)<br>entire text, all drawings | 1-4 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **04 January 2022** | **25 January 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2021/040268**

| Patent document cited in search report | | | Publication date (day/month/year) | Patent family member(s) | | | Publication date (day/month/year) |
|---|---|---|---|---|---|---|---|
| JP | 2016-65312 | A | 28 April 2016 | (Family: none) | | | |
| JP | 2016-65313 | A | 28 April 2016 | (Family: none) | | | |
| JP | 9-87800 | A | 31 March 1997 | (Family: none) | | | |
| JP | 2019-183218 | A | 24 October 2019 | (Family: none) | | | |
| WO | 2018/055937 | A1 | 29 March 2018 | US entire text, all drawings EP CN | 2019/0211414 3517645 109715841 | A1 A1 A | |
| US | 2015/0047754 | A1 | 19 February 2015 | KR entire text, all drawings | 10-2015-0019236 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H957329 A

- JP 2007264711 A

### Non-patent literature cited in the description

- **YUKITAKA MURAKAMI.** Metal fatigue-Effects of Small Defects and Inclusions. Yokendo, 1993